# EUROPEAN PATENT APPLICATION

(11) **EP 0 729 014 A1**
(43) Date of publication of application: **28.08.1996**
(21) Application number: 96200449.5
(22) Date of filing: 21.02.1996
(51) Int. Cl.: G01F 23/68

(54) **Electrical indicator of improved operation for the liquid fuel level in a motor vehicle tank**

(30) Priority: 24.02.1995 IT MI950116 U
(71) Applicant: BITRON S.p.A., I-10064 Pinerolo (Torino) (IT)
(72) Inventor: Ballada, Romano, 20138 Milano (IT)
(74) Representative: Fusina, Gerolamo

(57) **Abstract**

A liquid level indicator for a motor vehicle, comprising a support element to be fixed to the fuel tank in a vertical arrangement within said tank, said support element being provided at its lower end with apertures which connect the inner cavity of the container to the outer environment, an elongate cylindrical float inserted into and movable within said support element, and a rheostat comprising a mutually cooperating resistor and slider, the rheostat being carried by the float and the rheostat slider being carried by the container, wherein a rod on which said float is slidingly mounted is provided inside the container in a manner rigid therewith and extending parallel to the container axis.

## Description

This invention relates to an electrical level indicator for the liquid fuel contained in a motor vehicle tank.

More particularly, the invention relates to a transmitter intended to be located within the tank to provide an indicator with an electrical signal indicative of the fuel level in the tank.

The device of the present invention is of the type comprising:
- a support element to be fixed to the tank,
- a float movable relative to the support element,
- a rheostat comprising a resistor and a slider which mutually cooperate and undergo relative movement by the effect of the float displacement,
- said rheostat being connected into an electrical circuit such as to vary the current flowing through said circuit on the basis of the fuel level in the tank.

Italian patent application 68525 A/81 describes a device of the aforesaid type consisting essentially of an elongate container, in the interior of which there is mounted axially slidable a float of length equal to a substantial portion of the length of said interior. The float is subjected to the force of a system of counteracting springs which, together with the hydrostatic thrust. determine the position of point equilibrium of the float. Proper operation of this device is ensured by a hole which connects the tank atmosphere to the empty region of the container, so that the same pressure acts on the liquids in the tank and container. The present invention provides a development and improvement to the subiect of said patent application, such as to provide an electrical device for measuring the liquid level in a motor vehicle tank which is of even more accurate and simple operation, with substantial improvements in constructional simplicity and in the application of the device to the vehicle tank.

The present invention provides an electrical liquid fuel level indicator for motor vehicles comprising a support element of substantially cylindrical elongate shape having a length substantially corresponding to the tank height and intended to be fixed to the fuel tank vertically within said tank, said support element being provided at its upper end with means for its fixing to the tank and at its lower end with apertures which connect the inner cavity of the container to the outer environment, an elongate cylindrical float of height equal to a substantial portion of said support element and inserted into and movable within said support element, and a rheostat comprising a mutually cooperating resistor and slider, the rheostat being carried by the float and the rheostat slider being carried by the support element, there also being provided elastic elements acting on the float and fixed at that end not acting on the float to said support element, characterised in that a rod on which said float is slidingly mounted is provided inside the support element in a manner rigid therewith and extending parallel to the support element axis.

In a preferred embodiment of the present invention, said support element is advantageously a hollow container of essentially cylindrical shape.

Considerable advantages are immediately obtained with this arrangement. In this respect the float can slide on its guide under optimum conditions with regard to reference precision and sliding friction. In addition, as the container no longer has to act as the float guide, its cross-section does not have to be an exact reproduction of the outer shape of the float, and can hence be better adapted to the shape of the tank. In this manner, part of the container can be formed directly from a portion of the tank wall or of other components present in it.

The level indicator according to the present invention is very accurate and reliable. The high float inertia, due to the use of a float the length of which is equal to a substantial portion of the length of the internal cavity, prevents the float following sudden fuel level variations such as those caused for example yv vehicle jolting or direction changes. The float is hence sensitive only to lasting level variations such as those determined by the filling or emptving of the tank.

That surface which by friction opposes the movement of the float relative to the rigid tank-container reference system is of much smaller area in the arrangement of the present invention than in the traditional arrangement. In this latter, the entire perimetral area of the float acts by friction against the inner surface of the container, where perfect alignment of the two surfaces is almost never attainable. As a result, the float is almost never horizontal, ie perfectly perpendicular to the vertical axis of the container. This easily produces situations of slight catching, such that for even fairly significant liquid level variations, no variation in the float position is observed. With the present invention these problems are overcome, accurate and frictionless sliding of the float relative to the rod and hence relative to the container being assured under all conditions.

Further characteristics and advantages of the present invention will be more apparent from the ensuing description with reference to the accompanying drawing provided by way of non-limiting example and showing a section through the level indicator device of the present invention taken on a vertical plane.

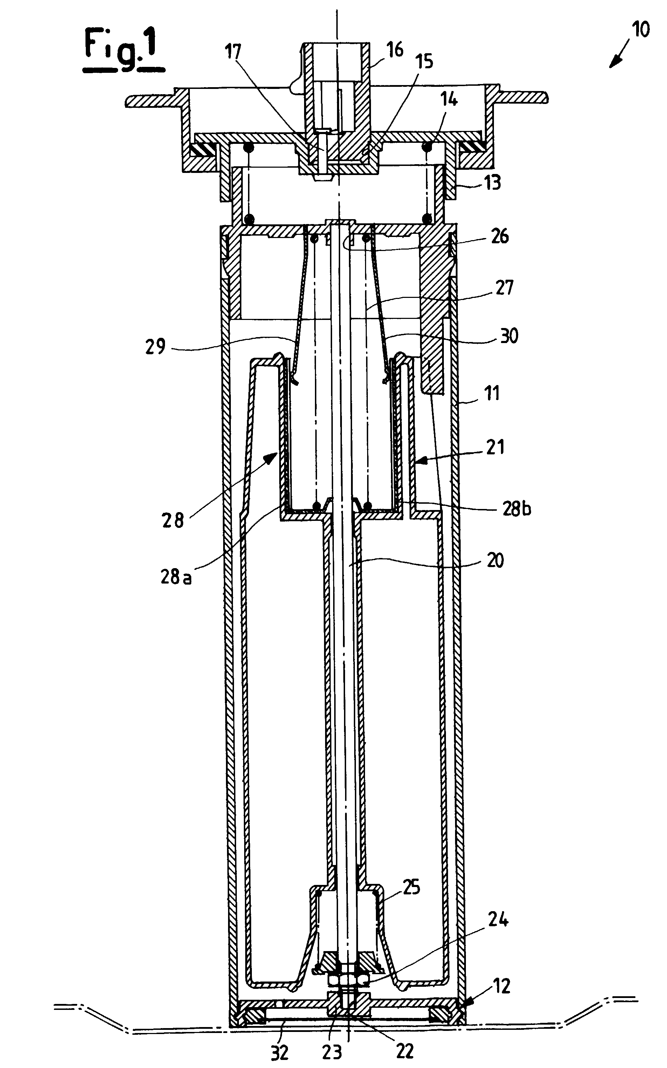

In Figure 1 the reference numeral 10 indicates overall a level indicator device according to the present invention.

It consists of a hollow cylindrical body 11 rigidly fixed to the vehicle tank (not shown). The top of said hollow cylindrical body 11 is inserted into a circular cover 13 which rests in a suitably shaped portion of the tank. Between the cylindrical body 11 and the cover 13 there is provided a helical spring 14 arranged to oppose excessive movements of the cylindrical body relative to the cover. In a central position of the cover, a recess 15 houses those means forming part of the electrical circuit which transmit the level signal to the appropriate instrument positioned on the vehicle dashboard (neither the instrument nor the dashboard being shown). Specifically, said recess 15 houses a non-conducting element 16 through which rivets 17 pass to connect the part below the cover to the part above at which the electric cables (not shown) carrying the signal to the indicator instrument positioned on the dashboard arrive.

In a central position in the hollow cylindrical body 11 there is positioned a thin rod 20 of height practically equal to the height of the body and arranged parallel to the longitudinal axis of the body. A float 21 is slidingly mounted on and symmetrical about said rod.

The cylindrical body 11, the rod 20 and the float 21 can be of any material, however a plastic material is preferred. Said body and said float can be effectively produced by moulding.

Lowerly, the rod 20 is inserted into a suitable dead hole 22 provided in the base portion 23 of the cylindrical body 11. An adjustment nut 24 is screwed on said rod immediately above the inserted portion. A spring 25 is provided between the nut 24 and float 21 to prevent excessive lowering of this latter.

At its top the rod 20 is inserted into the head portion 26 of the cylindrical body 11. A second spring 27 is inserted between said head portion 26 and said float 21 to oppose the action of the first spring 25.

The top of the float 21 houses a resistor arrangement 28 consisting of a resistor 28a and a conductive plate 28b electrically connected to each other and each cooperating with a respective sprung arm 29 and 30. The resistor 28a, the conductive plate 28b and the sprung arms 29 and 30 together form a rheostat, in which the total resistance offered to the passage of the electric current passing through it depends on the position in which the ends of the two sprung arms 29 and 30 make contact with the different conducting parts 28a and 28b. In practice, a relative upward movement of the float 21 results in a reduction in that resistor portion traversed by the electric current, with consequent reduction in the resistance offered to the passage of current (the resistance is proportional to the resistor length traversed by the current), a relative downward movement of the float 21 resulting in the opposite effect.

In the upper part of the cylindrical body 11 a hole, not shown, connects the external atmosphere to the atmosphere within the body, so that the same pressure exists both inside and outside the body.

The liquid contained in the tank enters the cylindrical body 11 through apertures 32 provided in its lower part, to occupy the free space between the float 21 and the cylindrical body 11.

As stated, the inertia of the float 21 is such that the level of the float 21 is not influenced significantly by momentary short-term variations in the fuel level within the tank and consequently within the cylindrical body 11.

## Claims

1. An electrical liquid fuel level indicator for motor vehicles comprising a support element of substantially cylindrical elongate shape having a length substantially corresponding to the tank height and intended to be fixed to the fuel tank vertically within said tank, said support element being provided at its upper end with means for its fixing to the tank and at its lower end with apertures which connect the inner cavity of the container to the outer environment, an elongate cylindrical float of height equal to a substantial portion of said support element and inserted into and movable within said support element, and a rheostat comprising a mutually cooperating resistor and slider, the rheostat being carried by the float and the rheostat slider being carried by the support element, there also being provided elastic elements acting on the float and fixed at that end not acting on the float to said support element, characterised in that a rod on which said float is slidingly mounted is provided inside the support element in a manner rigid therewith and extending parallel to the support element axis.

2. A level indicator as claimed in claim 1, characterised in that said support element is a hollow container of cylindrical shape.

3. A level indicator as claimed in claim 1 or 2, characterised in that said elastic elements are helical springs.

4. A level indicator as claimed in claim 1, characterised in that a conductive plate is associated with said resistor.

5. A level indicator as claimed in claim 4, characterised in that said slider consists of two sprung arms, of which one has an end in contact with the resistor, the other having an end in contact with the conducting plate.
